# EUROPÄISCHE PATENTSCHRIFT

(11) **EP 0 377 795 B1**
(45) Veröffentlichungstag und Bekanntmachung des Hinweises auf die Patenterteilung: **29.12.1993**
(21) Anmeldenummer: 89119572.9
(22) Anmeldetag: 21.10.1989
(51) Int. Cl.: F16H 63/20, F16H 63/30, F16H 63/36

(54) **Betätigungsvorrichtung für ein Gangschaltgetriebe**
Actuating device for a change-speed gear box
Dispositif de commande d'une boîte de changement de vitesse

(30) Priorität: 12.12.1988 DE 3841780
(43) Veröffentlichungstag der Anmeldung: 18.07.1990
(73) Patentinhaber: Dr.Ing.h.c. F. Porsche Aktiengesellschaft, 70435 Stuttgart (DE)
(72) Erfinder: Müller, Robert, Dipl.-Ing. FH, D-7251 Mönsheim (DE)

(56) Entgegenhaltungen:
- DE-C- 1 312 163
- FR-A- 2 403 494
- FR-A- 2 433 430
- US-A- 2 175 449

## Beschreibung

Die Erfindung betrifft eine Betätigungsvorrichtung für ein Gangschaltgetriebe eines Kraftfahrzeugs nach dem Oberbegriff des Anspruchs 1.

Eine ähnliche Betätigungsvorrichtung für ein Gangschaltgetriebe ist in der Zeitschrift "Sport Auto" 4/1988, Seite 127 beschrieben. Mit einem ersten, vom Gangschalthebel betätigten Bowdenzug werden die Getriebegänge vorgewählt, mit einem zweiten Bowdenzug werden die einzelnen Getriebegänge über Schaltgabeln und Synchronisierkupplungen geschaltet. Als Verbindung von den Schaltgabeln zu der durch die Bowdenzüge betätigten Vorwählwelle und Schaltwelle dient eine Betätigungsvorrichtung, wie sie aus DE-C-31 25 632 bekannt ist. Die Schaltwelle ist mit einem radial abstehenden Schaltfinger versehen, welcher in Schaltgassen bildende Ausnehmungen von Schaltschienen eingreift. Die auf die Schaltgabeln einwirkenden Schaltschienen sind quer zur Schaltwelle bewegbar. Durch Verschieben des Schaltfingers in Achsrichtung der Schaltwelle werden die Getriebegänge vorgewählt, durch Verschwenken des Schaltfingers sind die Getriebegänge schaltbar. Die neben der gewählten Schaltgasse liegenden Schaltschienen sind jeweils durch Nocken gesperrt, die einstückig mit dem Schaltfinger ausgebildet sind und von innen an kreisbogenförmigen Wandteilen der Schaltschienen anliegen.

Die US-2,175,449 behandelt ein Gangschaltgetriebe für ein Kraftfahrzeug, bei dem ein Schaltfinger mit einer zugeordneten Schaltschiene zusammenbeitet.

Um eine kompakte Bauweise der Schaltvorrichtung zu erzielen, muß der Schaltfinger so kurz wie möglich ausgeführt werden. Der zum Schalten nötige Schwenkwinkel des Schaltfingers wird deshalb relativ groß, so daß sich beim Schwenken der wirksame Hebelarm in unerwünschter Weise stark verkürzt.

Es ist die Aufgabe der Erfindung, eine funktionell verbesserte Schaltvorrichtung zu schaffen, die kostengünstig herstellbar ist.

Zur Lösung dieser Aufgabe dienen die kennzeichnenden Merkmale des Anspruchs 1. Wenn der Schaltfinger mit einer Evolventenflanke an einer ebenen Anlagefläche der zu betätigenden Schaltschiene angreift, läßt sich eine

Umsetzung der Schaltfinger-Schwenkbewegung in die Schiebebewegung der Schaltschiene mit über den Schwenkwinkel konstantem Übersetzungsverhältnis verwirklichen. Wird die Schaltbewegung über einen äußeren, linear betätigten Schwenkhebel in die Schaltvorrichtung eingeleitet, so ergibt sich insgesamt ein ansteigender Verlauf der Wegübersetzung zwischen dem vom Fahrer zu betätigenden Handschalthebel und dem die Gangsynchronisierung bewirkenden Schiebeweg. Somit steht, wie es funktionell richtig ist, am Anfang der Synchronisierbewegung eine hohe, am Ende eine geringe Hebelübersetzung zur Verfügung.

Nach Anspruch 2 greifen beidseitige Evolventenflanken des Schaltfingers in eine V-Ausnehmung der zu betätigenden Schaltschiene ein und liegen an deren ebenen V-Flächen an. Die Fertigung der solche V-Ausnehmungen aufweisenden Schaltschienen wird bedeutend vereinfacht und kostengünstiger durchführbar, insbesondere dann, wenn gehärtete Schaltschienen verwendet werden, die wegen des unvermeidlichen Härteverzugs nachgeschliffen werden müssen. Zusätzliche, die Erfindung ausgestaltende Merkmale sind in weiteren Unteransprüchen enthalten.

Ein Ausführungsbeispiel der Erfindung ist in der Zeichnung dargestellt und wird nachfolgend erläutert.

Es zeigt:

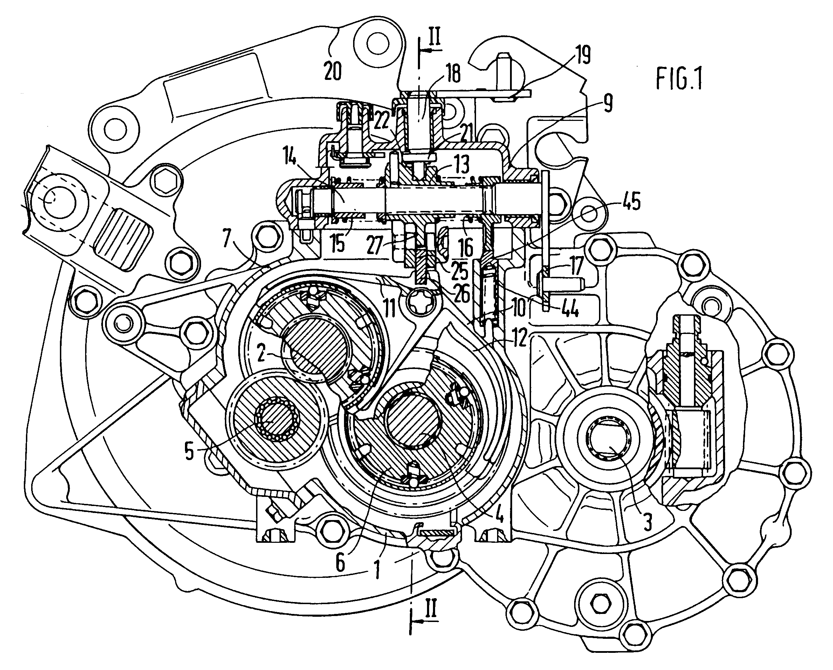

- Fig. 1: Querschnitt einer Schaltvorrichtung für ein 5-Gang-Getriebe,

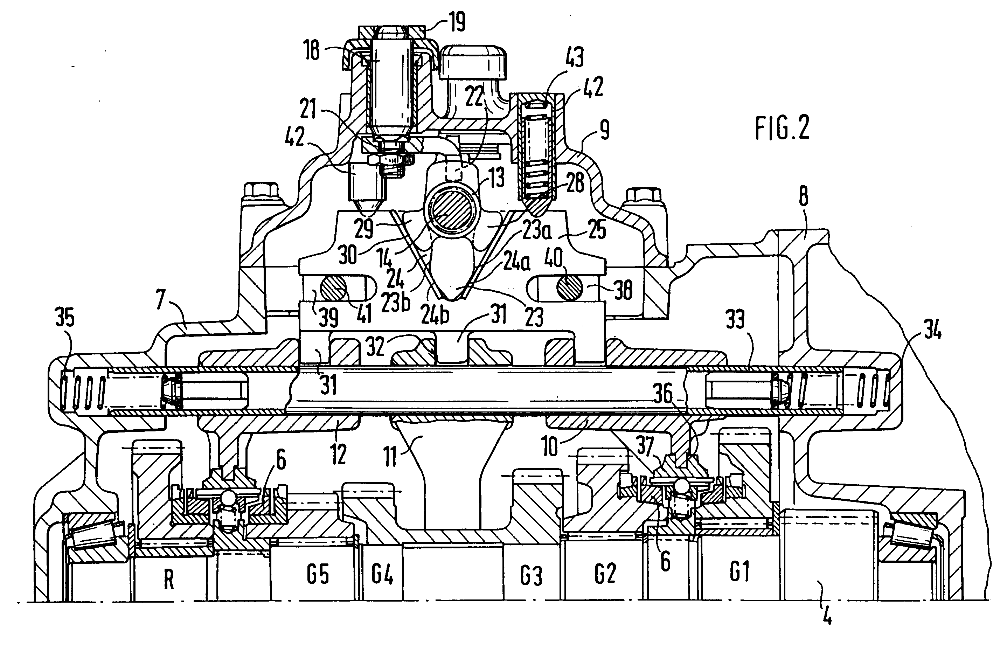

- Fig. 2: Längsschnitt der Schaltvorrichtung nach Linie II-II der Fig. 1,

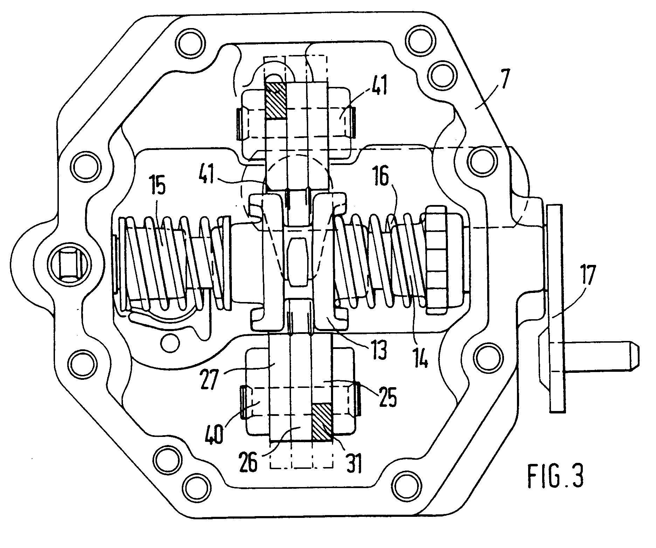

- Fig. 3: Draufsicht auf die Schaltvorrichtung bei abgenommenem Deckel.

In einem Getriebegehäuse 1 eines Kraftfahrzeugs sind zueinander parallel eine vom Motor angetriebene Antriebswelle 2, eine die Vorderachse 3 des Kraftfahrzeugs antreibende Abtriebswelle 4 und eine Zwischenwelle 5 für den Rückwärtsgang R gelagert. Die aus jeweils einem Festrad und einem mit ihm kämmenden Losrad bestehenden Getriebegänge G1, G2, G3, G4 und G5 sowie der Rückwärtsgang R sind in dieser Reihenfolge auf der Antriebswelle 2 bzw. Abtriebswelle 4 angeordnet und mit ihnen mittels Synchronisierkupplungen 6 verbindbar.

In seinem oberen Bereich ist an das Getriebegehäuse 1 ein Schaltgehäuse 7 angegossen und gemeinsam mit dem Getriebegehäuse 1 durch einen stirnseitigen Lagerdeckel 8 verschlossen. Auf das oben offene Schaltgehäuse 7 ist ein Deckel 9 aufgeschraubt, der die gesamte Betätigungsvorrichtung für die in die Schiebemuffen der Synchronisierkupplungen 6 eingreifenden Schaltgabeln 10, 11 und 12 enthält. Als zentrales Glied der Betätigungsvorrichtung dient ein Schaltstück 13, das mit einer Schaltwelle 14 mittels Kerbzahnverbindung drehmomentübertragend verbunden ist und zum Vorwählen der Gänge auf der Schaltwelle 14 entgegen der Kraft einer links an ihm anliegenden Schraubenfeder 15 und einer rechten Schraubenfeder 16 längsverschieblich ist. Die Schaltwelle 14 ist mit einem stirnseitig angebrachten Hebel 17 an einem nicht dargestellten, zu einem Gangschalthebel führenden Bowdenzug angelenkt. Die Vorwählbewegung wird mit einer Vorwählwelle 18 ausgeführt, die senkrecht zur Schaltwelle 14 im Deckel 9 gelagert ist und mit einem stirnseitigen Hebel 19 an einen ebenfalls mit dem Gangschalthebel verbundenen Bowdenzug 20 angelenkt ist.

Am anderen Ende trägt die Vorwählwelle 18 einen Wählhebel 21, der in eine Nut 22 an der Oberseite des Schaltstücks 13 eingreift. Diametral zu der Nut 22 gegenüberliegend ist an der Rohrnabe des Schaltstücks 13 ein Schaltfinger 23 angegossen, der in durchgehende V-Ausnehmungen 24 von drei aneinander anliegenden Schaltschienen 25, 26, 27 einführbar ist. Senkrecht zum Schaltfinger und axial zu ihm versetzt sind an dem Schaltstück 13 zwei radial vorstehende Sperrnocken 28, 29 angebracht; sie bilden mit der durch den Schaltfinger und die Nut gehenden Mittelebene des Schaltstücks 13 ein Kreuz. Die Außenkontur der Sperrnocken 28 ist kreisbogenförmig und ist in V-Ausnehmungen 30 der Schaltschienen 25, 26, 27 einführbar. Die Sperrnocken 28, 29 sind in Längsrichtung des Schaltstücks 13 so zum Schaltfinger 23 angeordnet, daß, wenn der Schaltfinger 23 in die V-Ausnehmung 24 der einen Schaltschiene 25 eingreift, die Sperrnocken 28, 29 in die V-Ausnehmungen 24 der beiden anderen Schaltschienen 26, 27 eingreifen und sie unverschieblich arretieren.

Jede der drei Schaltschienen 25, 26, 27 trägt an ihrer Unterseite eine Schaltnase 31, wobei die Schaltnase 31 der mittleren Schaltschiene 26 in eine Ausnehmung 32 der mittleren Schaltgabel 11, die Schaltnasen 31 der linken und rechten Schaltschienen 25, 27 in die linke Schaltgabel 12 bzw. rechte Schaltgabel 10 eingreifen.

Die Schaltgabeln 10, 11, 12 sind auf einem zur Abtriebswelle 4 parallelen Führungsrohr 33 längsbeweglich geführt, das im Schaltgehäuse 7 gelagert und ihm gegenüber durch beidseitige Federn 34 und 35 längsbeweglich abgestützt ist, um ein Verklemmen der Schaltgabeln 10, 11, 12 zu vermeiden. Die Schaltgabeln greifen mit ihren Gabeln in Ringausdrehungen der die Synchronisierkupplungen 6 betätigenden Schiebemuffen 37 ein.

Um die Schaltschienen 25, 26, 27 parallel zum Führungsrohr 33 längsführen zu können, weisen sie beidseitig Schlitze 38, 39 auf, in die Nieten 40, 41 eingepaßt sind. Von oben her greifen in Ausnehmungen der Schaltschienen 25, 26, 27 Sperrhülsen 42 ein, die parallel liegend zur Vorwählwelle 18 im Deckel 9 längsbeweglich eingepaßt und durch Schraubenfedern 43 belastet sind. Die Sperrhülsen 42 definieren die neutrale Mittelstellung der Schaltschienen 25, 26, 27.

Die Drehlagen der Schaltwelle 14 bzw. des Schaltstücks 13 und damit die Schaltstellungen der Getriebegänge sind durch eine Arretierhülse 44 gesichert, die federnd in Ausnehmungen einer an der Schaltwelle 14 befestigten Rastscheibe 45 eingreifen.

## Patentansprüche

1. Vorrichtung zum Betätigen eines synchronisierten Gangschaltgetriebes eines Kraftfahrzeuges, mit einem Schaltstück (13) das mit einem an einer Vorwählwelle (18) befestigten Wählhebel auf einer Schaltwelle (14) längsverschiebbar ist und mit der Schaltwelle (14) drehfest verbunden ist, wobei das Schaltstück (13) zum Betätigen der den einzelnen Getriebegangen (G1, G2, G3, G4 und G5) zugeordneten, in die Synchronisierkupplungen (6) eingreifenden Schaltgabeln (10, 11 und 12) mittels eines an ihm angebrachten Schaltfingers (23) mit mehreren nebeneinander liegenden Schaltschienen (25, 26 und 27) in der Weise zusammenwirkt, daß jeweils eine Schaltschiene bewegt wird und die restlichen Schaltschienen verriegelt sind, dadurch gekennzeichnet, daß der Schaltfinger (23) beidseitig mit einer Evolventenflanke (23a, 23b) versehen ist, die an ebenen V-Flächen (24a, 24b) einer an der Schaltschiene (26) ausgebilderen V-Ausnehmung (24) anliegen.

2. Vorrichtung nach Anspruch 1, dadurch gekennzeichnet, daß die V-Ausnehmung (24) einen Winkel von ca. 60 ° hat.

3. Vorrichtung nach Anspruch 1, dadurch gekennzeichnet, daß am Schaltstück (13) senkrecht zum Schaltfinger (23) und axial zu ihm versetzt diametral einander gegenüberliegende Sperrnocken (28, 29) angebracht sind, deren kreisförmige Außenkonturen (30) an den V-Flächen (24a, 24b) der zu verriegelnden Schaltschienen (25, 27) anliegen.

4. Vorrichtung nach Anspruch 1, dadurch gekennzeichnet, daß jeweils zwei Getriebegängen drei Schaltschienen (25, 26, 27) zugeordnet sind, die mit ihren Schaltnasen (31) in Schaltgabeln (10, 11, 12) eingreifen, die auf einem zu den Getriebewellen (2, 4) parallelen Führungsrohr (33) längsgeführt sind und in die die Synchronisierkupplungen (6) betätigenden Schiebemuffen (37) eingreifen.

## Claims

1. A device for actuating a synchronized change-speed gearbox of a motor vehicle, having a gear-shift member (13), which is longitudinally displaceable on a gear-shift shaft (14) by a selector lever secured to a pre-selector shaft (18) and which is connected rotationally rigidly to the gear-shift shaft (14), wherein the gear-shift member (13) cooperates with a plurality of adjacent gear-shift rails (25, 26 and 27) by means of a gear-shift finger (23) mounted thereon for actuating the gear-shift forks (10, 11 and 12) associated with the individual gears (G1, G2, G3, G4 and G5) and engaging in the synchronizing clutches (6), in such a way that in each case one gear-shift rail is moved and the remaining gear-shift rails are locked, **characterized in that** the gear-shift finger (23) is provided on both sides with an involute flank (23a, 23b) resting against flat V-faces (24a, 24b) of a V-shaped recess (24) formed on the gear-shift rail (26).

2. A device according to Claim 1, **characterized in that** the V-shaped recess (24) has an angle of about 60°.

3. A device according to Claim 1, **characterized in that** diametrically opposite locking cams (28, 29), the circular external profiles (30) of which rest against the V-faces (24a, 24b) of the gear-shift rails (25, 27) to be locked, are mounted on the gear-shift member (13) at right angles to the gear-shift finger (23) and offset axially with respect thereto.

4. A device according to Claim 1, **characterized in that** two respective gears have associated therewith three gear-shift rails (25, 26, 27) engaging with their gear-shift studs (31) in gear-shift forks (10, 11, 12) which are guided longitudinally on a guide tube (33) parallel to the transmission shafts (2, 4) and which engage in the sliding sleeves (37) actuating the synchronizing clutches (6).

## Revendications

1. Dispositif d'actionnement d'un mécanisme de changement de vitesse synchronisé d'un véhicule automobile, comprenant un élément de commutation (13) pouvant être déplacé longitudinalement sur un arbre de changement de vitesse (14) avec un levier de sélection fixé à un arbre de pré-sélection (18), et relié de façon fixe en rotation à l'arbre de changement de vitesse (14), l'élément de commutation (13) destiné à l'actionnement des fourchettes de commutation (10, 11 et 12) associées aux vitesses individuelles (G1, G2, G3, G4 et G5) et coopérant avec les accouplements de synchronisation (6) au moyen d'un doigt de commutation monté sur lui et comprenant plusieurs barres de changement de vitesse (25, 26 et 27) disposées les unes à côté des autres de manière qu'une seule barre de changement de vitesse soit déplacée et que les autres barres de changement de vitesse soient verrouillées, caractérisé en ce que le doigt de commutation (23) est muni de chaque côté de flancs à développante (23a, 23b) qui s'appliquent sur des surfaces planes en V (24a, 24b) d'un évidement en V (24) constitué sur la barre de changement de vitesse (26).

2. Dispositif selon la revendication 1, caractérisé en ce que l'évidement en V (24) forme un angle d'environ 60°.

3. Dispositif selon la revendication 1, caractérisé en ce que des butées d'arrêt (28, 29) disposées à l'opposé l'une de l'autre sont montées sur l'élément de commutation (13) perpendiculairement par rapport au doigt de commutation (23) et en étant décalées axialement de ce dernier, butées dont les contours externes de forme circulaire (30) s'appliquent sur les surfaces (24a, 24b) du V des barres de changement de vitesse (25, 27) à verrouiller.

4. Dispositif selon la revendication 1, caractérisé en ce que deux vitesses respectives du mécanisme sont associées à trois barres de changement de vitesse (25, 26, 27) qui pénètrent par leurs nez de commutation (31) dans des fourchettes de commutation (10, 11, 12), qui sont guidées longitudinalement sur un tube de guidage (33) parallèle aux arbres (2, 4) du mécanisme et qui pénètrent dans des manchons coulissants (37) qui actionnent les accouplements de synchronisation (6).
